(19) Europäisches Patentamt / European Patent Office / Office européen des brevets

(11) **EP 2 990 642 A1**

(12) **EUROPEAN PATENT APPLICATION**
published in accordance with Art. 153(4) EPC

(43) Date of publication:
**02.03.2016 Bulletin 2016/09**

(51) Int Cl.:
*F03D 1/06* (2006.01)      *F03D 13/00* (2016.01)

(21) Application number: **13882716.7**

(22) Date of filing: **26.04.2013**

(86) International application number:
**PCT/JP2013/062318**

(87) International publication number:
**WO 2014/174654 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventors:
• **SHIGENAGA, Yasushi**
**Tokyo 100-8280 (JP)**

• **WATANABE, Masatoshi**
**Tokyo 100-8280 (JP)**
• **FUNABASHI, Shigehisa**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **WIND POWER GENERATION DEVICE**

(57)      To provide a wind power generation device in which load fluctuation can be reduced, provided are: a tower; a nacelle provided on the tower and supported rotatably with respect to the tower; a rotor hub which is supported rotatably with respect to the nacelle and which has a hub housing; a blade which receives a wind to obtain a lift force; and a bearing which supports the blade rotatably with respect to the rotor hub. The bearing is provided in a status where it is tilted from a position on a circumference with a rotational axis of the rotor hub as a center.

FIG. 1

## Description

Technical Field

The present invention relates to a wind power generation device, and more particularly, to connection between a hub and a blade.

Background Art

As conventional techniques in the present technical field, techniques described in e.g. patent literature 1 and patent literature 2 are known. The patent literature 1 describes a wind turbine and its operation method. The wind turbine has a blade passage area control device which maintains maximum output of the wind turbine within a range to avoid occurrence of fatigue failure by connecting a rotor head (corresponding to a rotor hub) to a blade via a rotatable connection ring to realize a variable blade passage area in correspondence with axial center wind speed of the rotor head. Further, the patent literature 2 describes a wind turbine having a rotor for horizontal axis wind turbine with excellent durability. The end side of a blade is tilted to a counter-rotational direction of the rotor so as to change twist of the blade in correspondence with incidence wind speed to the blade. It is possible to suppress load fluctuation by controlling a lift force and a thrust force of the blade.

Citation List

Patent Literature

PTL 1: Japanese Patent Application Laid-Open No. 2004-108162
PTL 2: Japanese Patent Application Laid-Open No. 2000-310179

Summary of Invention

Technical Problem

In a horizontal axis wind turbine, instant overlap between a blade and a tower in a wind direction occurs during rotation of a rotor. Each time any one of the blades and the tower overlap in the wind direction, aerodynamic interference occurs between them, accordingly, load fluctuation always occurs in the entire wind turbine. It has much influence on the fatigue strength. Accordingly, as damage is accumulated, it is desired to reduce the load fluctuation and improve the reliability.

Note that in the patent literature 1, the rotor head and the blades are not directly connected. That is, to realize a blade passage area variable in correspondence with wind speed in the axial center direction so as to suppress fatigue failure, the blades and the rotor head are connected via a connection ring rotatable in a wind direction plane. As described above, the rotor head corresponds to a rotor hub. It has a bearing (reference numeral 5) to support the blades rotatably with respect to the rotor hub. The rotor head side of the connection ring is rotated so as to increase the distance between the tower and the blades, to reduce load fluctuation. However, the center of gravity of the blades moves to the downstream side of the wind turbine by the rotation of the connection ring. As bending moment of the rotor head bottom and the tower is increased, the load on the entire wind turbine may be seriously increased. Further, since it is necessary to perform the rotation of the connection ring in addition to pitch rotation of the blades, damage risk may be increased. From such viewpoint, there is room for improvement to improve the reliability. Further, in the patent literature 1, the connection ring rotatable in the wind direction plane is provided so as to realize a blade passage area variable in correspondence with wind speed in axial center direction. There is no consideration of comparatively large load fluctuation due to pressure rise by aerodynamic interference between the blades and the tower.

In the patent literature 2, with a simple structure, the blades are twisted in correspondence with incidence wind speed depending on flexible characteristic of material so as to reduce the load fluctuation. However, there is a limit to load control in correspondence with change of incidence wind speed only depending on material flexibility of the blade. Further, in the patent literature 2, the structure is simplified so as to change incidence angle to the blade in correspondence with incidence wind speed. The twist occurs only due to material flexibility of the blades. There is no consideration of comparative large load fluctuation due to pressure rise by aerodynamic interference occurred between the blades and the tower.

An object of the present invention is to provide a wind power generation device in which load fluctuation can be reduced.

Solution to Problem

To solve the above problem, the wind power generation device according to the present invention is a wind power generation device including: a tower; a nacelle that is provided on the top of the tower and is supported rotatably with respect to the tower; a rotor hub that is supported rotatably with respect to the nacelle and has a hub housing; a blade that receives a wind to obtain a lift force; and a bearing that supports the blade rotatably with respect to the rotor hub, wherein the bearing is provided in a status where it is tilted from a position on a circumference with a rotational axis of the rotor hub as a center.

Advantageous Effects of Invention

According to the present invention, it is possible to provide a wind power generation device in which load fluctuation can be reduced.

Brief Description of Drawings

Figure 1 is a general view of a downwind wind turbine according to an example of the present invention viewed from the leeward side.

Figure 2 is a side view of the downwind wind turbine according to the example of the present invention;

Figure 3 is an enlarged view of a rotor hub according to the example of the present invention.

Figure 4 is an enlarged view of the rotor hub according to the example of the present invention.

Figure 5 is an enlarged view of a tower and blades according to the example of the present invention viewed from the leeward side.

Figure 6 is a diagram of wind speed distribution in a horizontal plane of the tower and the blades according to the example of the present invention.

Figure 7 is a graph of rotor load according to the example of the present invention.

Figure 8 is a diagram of a rotor according to the example of the present invention.

Figure 9 is a diagram showing the periphery of a bearing according to the example of the present invention.

Description of Embodiments

Hereinbelow, an example preferable for implementation of the present invention will be described with reference to the drawings. Note that the following description is merely an example without intention of limiting embodiments of the present invention. Various changes of the present invention other than the following example are possible.

Example

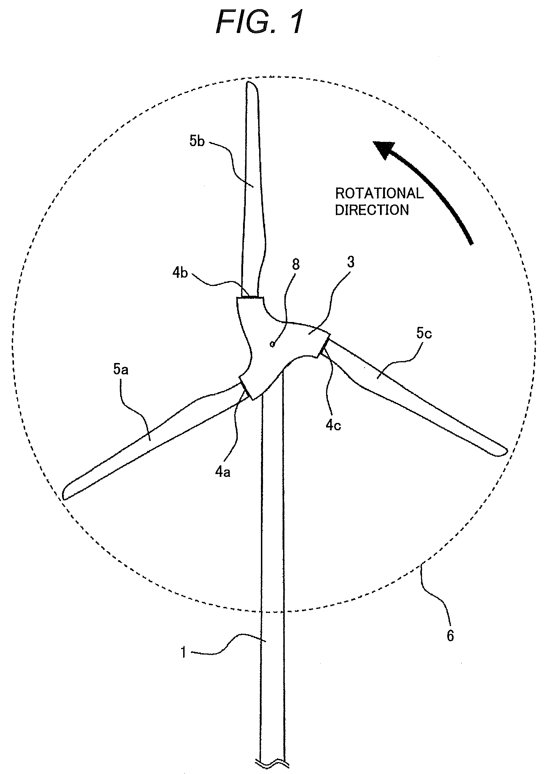

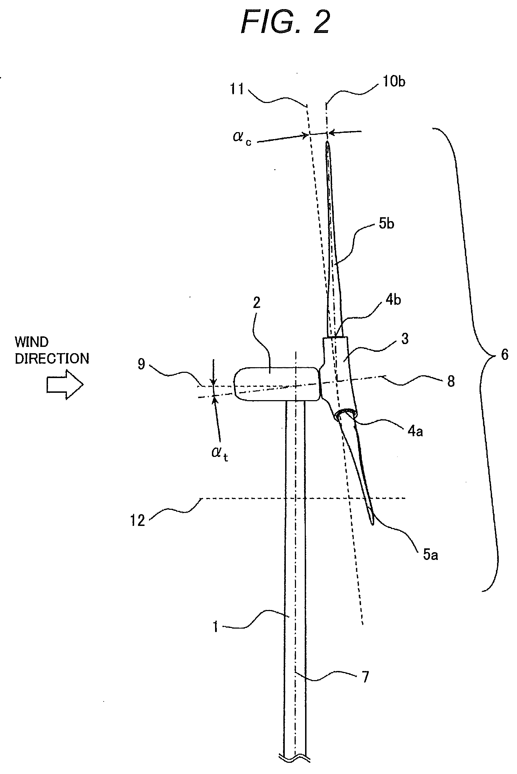

As shown in Figure 1 and Figure 2, the downwind wind turbine according to the present example has a tower 1 to support load occurred in the entire wind turbine, a nacelle 2 provided on the tower 1 and supported on the top of the tower rotatably with respect to the tower 1, plural blades 5a, 5b and 5c to obtain a lift force from a wind, a rotor hub 3 rotatably supported with respect to the nacelle 2 to convert the lift force obtained with the respective blades 5a, 5b and 5c into rotational kinetic energy, and respective bearings 4a, 4b and 4c connecting the respective blades 5a, 5b and 5c to the rotor hub 3. Upon power generation operation, the rotor hub 3 is rotated in a status where the respective blades 5a, 5b and 5c are positioned on the leeward side of the tower 1. The blades 5a, 5b and 5c are directly connected to the rotor hub 3 via the bearings 4a, 4b and 4.

Figure 1 shows a schematic structure of the downwind wind turbine according to the present example viewed from the leeward side, and viewed from a direction orthogonal to a rotational plane 11 of the rotor 6 (axis direction of a rotor rotational axis 8). Further, Figure 2 shows a schematic structure of the downwind wind turbine from a side surface.

In the wind turbine, the tower 1 is extended in an approximately vertical direction. The bottom of the tower 1 on the lower side is installed on a base when it is on the ground. When it is on the sea, it is joined to a base installed from the ocean floor, or joined to a floating-body base floating near the sea surface. The rotor 6 is connected via a main shaft to the leeward side of the nacelle 2. The nacelle 2 and the rotor 6 control a yaw angle by rotating about the tower central axis 7 of the tower 1 as an axis. The nacelle 2 is provided with all or a part of a power generator, an electric power control device, a power transmission mechanism, a cooling device, and a sensor to measure wind speed and wind direction.

The rotor 6 is mainly configured with the rotor hub 3 and the respective blades 5a, 5b and 5c. The rotor hub 3 is rotated about the rotor rotational axis 8. In the wind turbine in the present example, it is rotated counterclockwisely viewed from the leeward side during power generation. The rotational direction of the wind turbine is not limited to the counterclockwise.

As shown in Figure 2, in the downwind wind turbine according to the present example, the rotor rotational axis 8 is tilted with respect to a horizontal plane 9 at a tilt angle $\alpha_t$. The rotor hub 3 which is rotated about the rotor rotational axis 8 is installed also in a status where it is tiled with respect to the horizontal plane 9. The tilt angle $\alpha_t$ is set so as to avoid collision between the tower 1 and the respective blades 5a, 5b and 5c during rotation of the rotor 6.

The rotor hub 3 and the respective blades 5a, 5b and 5c are connected via the respective bearings 4a, 4b and 4c. The respective blades 5a, 5b and 5c are supported with the respective bearings 4a, 4b and 4c rotatably with respect to the rotor hub 3 on the outer peripheral side of the rotor 6.

Figure 2 shows a bearing rotational axis 10b which is a rotational axis especially as a rotational axis of the bearing 4b among the respective bearings 4a, 4b and 4c with respect to the rotor hub 3. The coning angle $\alpha_c$ is determined with the angle formed with the rotor rotational plane 11 and the bearing rotational axis 10b. The bearing rotational axis 10b is tilted in a direction away from the nacelle 2 from the rotor rotational plane 11. As the respective blades 5a, 5b and 5c are connected to the respective bearings 4a, 4b and 4c, they are also tilted in an axial direction of the rotor rotational axis 8. The coning angle $\alpha_c$ is set so as to avoid collision between the tower 1 and the respective blades 5a, 5b and 5c during rotation of the rotor 6.

The respective blades 5a, 5b and 5c are rotated with the respective bearings 4a, 4b and 4c combined with a pitch angle control mechanism in correspondence with operation status of the wind turbine. When the respective blades 5a, 5b and 5c are rotated with the respective bearings 4a, 4b and 4c and an incidence wind angle to the respective blades 5a, 5b and 5c is controlled, the rotation velocity of the rotor 6 is controlled. Note that when the coning angle $\alpha_c \neq 0°$ holds, as the respective bearings 4a, 4b and 4c are tilted in the axial direction of the rotor rotational axis 8, they should be indicated in an tilted status in the viewpoint in Figure 1. However, in Figure 1, for the sake of simplification of explanation, the tilt at the coning angle $\alpha_c$ is omitted (simply coning angle $\alpha_c = 0°$ is indicated).

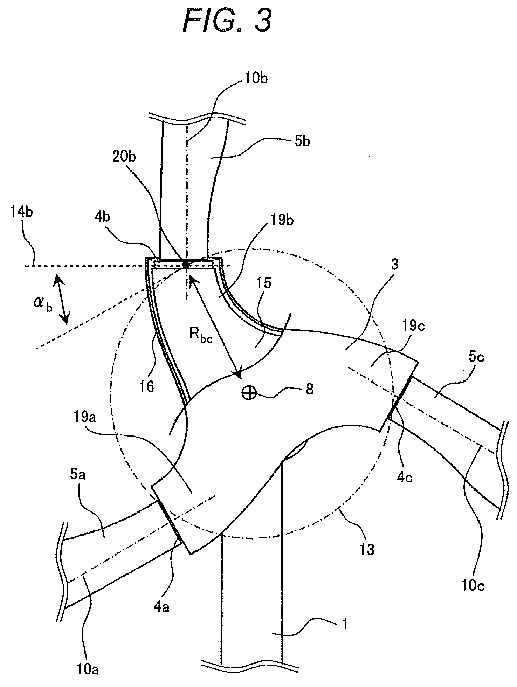

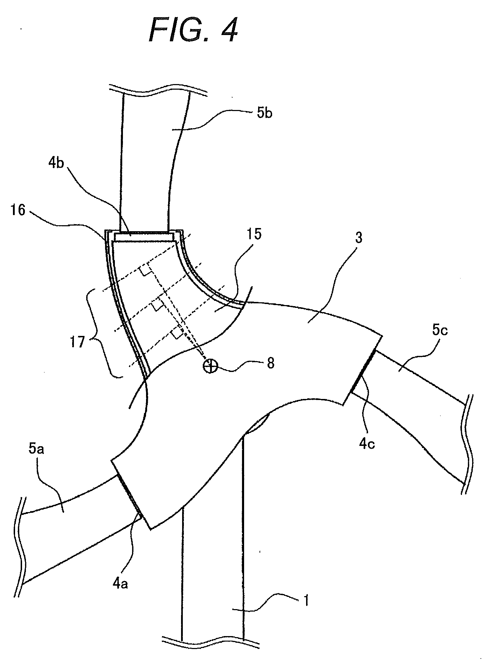

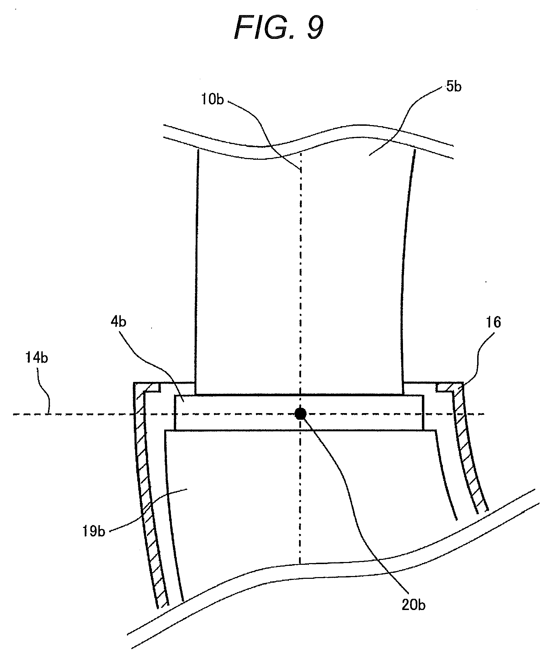

Figure 3 and Figure 4 are enlarged views of a periphery of the rotor hub 3 in Figure 1, showing the schematic structure inside the rotor hub 3. Further, Figure 9 shows the structure around the bearing 4b. In Figure 9, a bearing rotational plane 14b is a plane where the bearing 4b is rotated and a plane including the center of gravity of the bearing 4b. A point where the bearing rotational axis 10b and the bearing rotational plane 14b intersect is defined as a rotational center 20b of the bearing rotational plane 14b. As shown in Figure 3, the rotor hub 3 is mainly configured with a hub housing 15 and a spinner cover 16. The spinner cover 16 covers the outside of the hub housing 15. The respective bearings 4a, 4b and 4c are connected to the hub housing 15 of the rotor hub 3. A bearing attachment angle $\alpha_b$ is represented as a contact angle of the rotor hub 3 to the bearing rotational plane 14b with respect to a position on the circumference 13 with the rotor rotational axis 8 as a center. The respective bearings 4a, 4b and 4c in the present example are installed in a status where they are tilted in an opposite direction to the rotation of the rotor 6 from positions on the circumference 13 at the bearing attachment angle $\alpha_b$. Note that the circumference 13 includes the rotational center 20b. The distance from the rotor rotational axis 8 to the rotational center 20a (the radius of the circumference 13) is defined as $R_{bc}$, Further, in Figure 3, they are tilted in the opposite direction to the rotation of the rotor 6, however, they may be tilted in the rotational direction of the rotor 6 at the bearing attachment angle $\alpha_b$.

In the hub housing 15, the supporting members for blade 19a, 19b and 19c are respectively extended from the rotor rotational axis 8 side to the respective blades 5a, 5b and 5c side. The material is continued from the center of the hub housing 15 to a portion connected to the respective bearings 4a, 4b and 4c, thus an integral structure is formed. The respective supporting members for blade 19a, 19b and 19c are extended away further from the rotor rotational axis 8 positioned at the rotational center of the rotor hub 3 than any other portion in the nub housing 15. Further, in the present example, only one of the respective bearings 4a, 4b and 4c is provided from the rotor rotational axis 8 of the rotor hub 3 to the ends of the respective blades 5a, 5b and 5c. In the respective supporting members for blade 19a, 19b and 19c, the bearings 4a, 4b and 4c are bearings provided in the positions closest to the rotor rotational axis 8 of the rotor hub 3.

In Figure 4, when a plane which intersects the rotor radial direction at a point of the center of gravity in a (contour) cross section of the supporting member for blade 19b of the hub housing 15 is defined as an orthogonal plane 17 in the rotor radial direction, the (contour) cross section of the supporting member for blade 19b in the orthogonal plane 17 of the hub housing 15 is enlarged from the side connected to the bearing 4b (or the blade 5b side) toward the rotor rotational axis 8 side. (the cross sections of the supporting members for blade 19a and 19c are similarly increased)

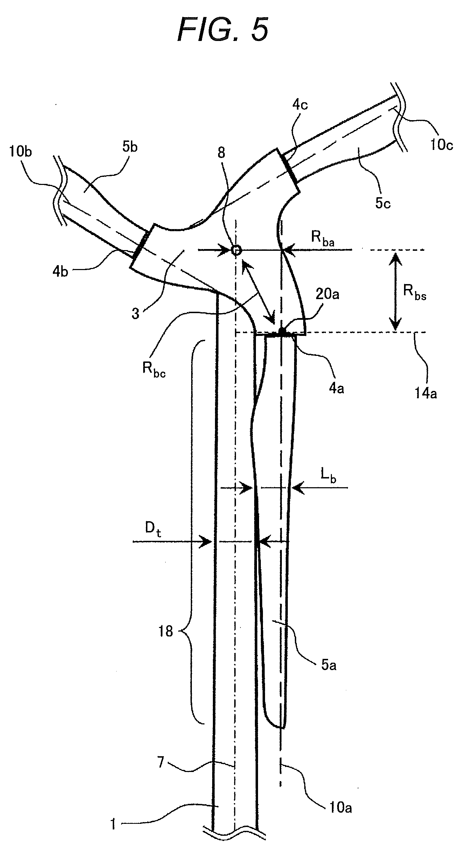

Figure 5 shows the downwind wind turbine in the present example viewed from a direction orthogonal to the rotational plane 11 of the rotor 6 on the leeward side as in the case of Figure 1 (axial direction of the rotor rotational axis 8). Especially, a status where the tower central axis 7 and the bearing rotational axis 10a of the bearing 4a are arrayed in approximately parallel to each other on a projection plane in Figure 5.

In Figure 5, $R_{ba}$ denotes a distance from the rotor rotational axis 8 to the bearing rotational axis 10a, and $R_{bc}$, a distance from the rotor rotational axis 8 to the rotational center 20a. The distance $R_{bs}$ is defined with an expression 1. Note that as a supplementary explanation, when the coning angle $\alpha_c \neq 0°$ holds, the respective bearing rotation axes 10a, 10b and 10c are tilted in the axial direction of the rotor rotational axis 8. Accordingly, a straight line indicating the distance $R_{ba}$ and a straight line indicating the distance $R_{bc}$ do not intersect structurally.

$$R_{bs} = \sqrt{R_{bc}^2 - R_{ba}^2} \cdots\cdots \text{Expression 1}$$

Assuming that a mean width of the tower 1 in a region 18 where the blade 5a overlaps the tower 1 by rotation of the rotor 6 is $D_t$, and an edgewise mean width of the blade 5a is $L_b$, the straight line $R_{ba}$ is equal to or greater than $(0.5 D_t + 0.5 L_b)$ and equal to or less than $R_{bs}$ in the structure shown in Figure 5. That is, from the relation of the expression 1, the distance $R_{bs}$ is inevitably equal to or greater than $(0.5 D_t + 0.5 L_b)$.

The function and operation of the downwind wind turbine according to the present example having the above configuration will be described under assumption of power generation status.

The rotor 6 starts rotation at a predetermined or higher wind speed, and the number of revolutions is increased in accordance with rise of the wind speed. Further, the nacelle 2 and the rotor 6 control the yaw angle with the tower central axis 7 as an axis in correspondence with wind direction change using a wind direction sensor provided in the nacelle 2. The respective blades 5a, 5b and 5c are rotated about the respective bearing rotation axes 10a, 10b and 10c with the respective bearings 4a, 4b and 4c combined with an unshown pitch angle control mechanism. The wind incidence angles to the respective blades 5a, 5b and 5c are controlled, and as the number of revolutions of the rotor 6 is increased, a power generation amount is increased. In the downwind wind turbine, in a case where rated output and rated number of revolutions are achieved, when the wind speed is further increased, to maintain the rated output and the rated number of revolutions, the wind incidence angles to the respective blades 5a, 5b and 5c are further controlled, even to a status close to feathering, in some cases. When an extreme wind blows and the wind speed is high, to stop the operation, the incidence angles to the respective blades 5a, 5b and 5c are controlled to a complete feathering status.

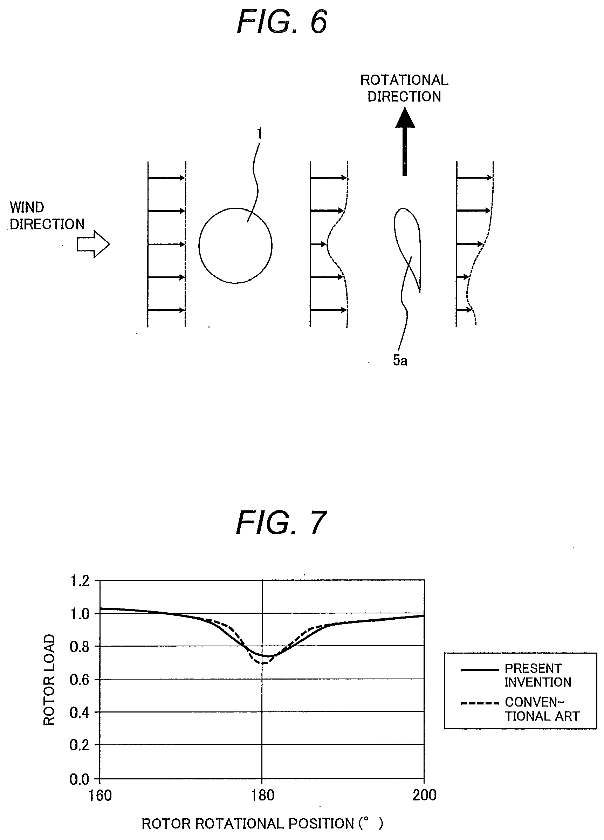

When the rotor 6 is rotated, the tower 1 and the respective blades 5a, 5b and 5c overlap each other in a wind direction periodically to a certain degree. Figure 6 shows wind speed distribution in a horizontal plane 12 (shown in Figure 2) in a status where the tower 1 and the blade 5a overlap with respect to a wind direction. In Figure 6, since nothing disturbs the flow on the upstream side of the tower 1, a wind comes in a status where the wind speed distribution is regulated to a certain degree. However, when the wind passes through the tower 1 and flows to the downstream side, the flow is blocked with the tower 1, and a low wind speed region occurs. Then in a status shown in Figure 6, the blade 5a enters the low wind speed region.

As the blade 5a obtains a lift force from an aerodynamic force by the wind and converts it into rotational kinetic energy, heavy load corresponding to the force is applied to the blade 5a. However, the moment the blade enters the low wind speed region on the downstream side of the tower 1, the blade 5a does not obtain a sufficient lift force due to the low wind speed and the load is suddenly reduced. Then, the moment it moves out of the low wind speed region on the downstream side of the tower 1, the wind speed is restored, then the lift force of the blade 5a is restored. This time suddenly heavy load is applied to the blade.

Further, at a moment the tower 1 and the blade 5a overlap with respect to the wind direction, pressure between the tower 1 and the blade 5a rises. At this time, as wall surface pressure on the downstream side of the tower 1 also rises, the load on the tower 1 is changed to no small extent. That is, the aerodynamic interference with the tower 1 and the respective blades 5a, 5b and 5c always cause the entire load fluctuation in the downwind wind turbine and greatly influences fatigue strength.

In contrast, in the present example, the respective bearings 4a, 4b and 4c are installed in a status where they are tilted from the positions on the circumference 13 with the rotor rotational axis 8 as a center, as indicated with the bearing attachment angle $\alpha_b$. The respective blades 5a, 5b and 5c connected to the respective bearings 4a, 4b and 4c are also tilted from the positions on the circumference 13 with the rotor rotational axis 8 as a center (in the opposite direction to the rotation of the rotor 6). With this configuration, when the respective blades 5a, 5b and 5c cross the downstream side of the tower 1, the tower 1 and the full lengths of the respective blades 5a, 5b and 5c do not overlap simultaneously in the wind direction. The respective blades 5a, 5b and 5c sequentially overlap the tower 1 by a part of the blade regions in accordance with rotation of the rotor 6, which disperses the aerodynamic interference with respect to the tower 1 and mitigates a load fluctuation maximum value.

Figure 7 conceptually indicates load fluctuation in an arbitrary part of the rotor with respect to rotor rotational position. The downwind wind turbine according to the present example is compared with a conventional general downwind wind turbine where the tower and the full length of the blade simultaneously overlap each other in the wind direction. Assuming that the rotor rotational position when the blade of the rotor is the highest point is 0°, the blade crosses the downstream side of the tower around a rotor rotational position 180° in both of the general downwind wind turbine and the downwind wind turbine according to the present example. Note that in Figure 7, the rotor load "1" is mean load of the rotor. As shown in Figure 7, it is possible to make the load fluctuation when the respective blades 5a, 5b and 5c cross the downstream side of the tower 1 milder, by configuring such that the respective bearings 4a, 4b and 4c are tilted from positions on the circumference 13 with the rotor rotational axis 8 as a center. With this configuration, it is possible to reduce the load fluctuation as the entire wind turbine. That is, it is possible to improve the reliability by reducing the fluctuation of load applied to the respective blades 5a, 5b and 5c and the tower 1 when the wind turbine has been used for a long period.

Further, to install the respective bearings 4a, 4b and 4c in the status where they are tilted at the bearing attachment angle $\alpha_b$, the hub housing 15 is relatively large. Although unshown, the installation of the respective bearings 4a, 4b and 4c in a status where they are further tilted at the bearing attachment angle $\alpha_b$, is possible simply by enlarging a round-shaped hub housing to the positions of the respective bearings 4a, 4b and 4c. However, when the hub housing is simply enlarged, the weight of the hub housing is unnecessarily increased, and the cost is excessively increased. Accordingly, as in the case of the present example, it is possible to suppress the excessive weight increase of the hub housing 15 and suppress cost increase by forming the respective supporting members for blade 19a, 19b and 19c necessary to support the respective blades 5a, 5b and 5c such that the respective supporting members for blade 19a, 19b and 19c are extended away further from the rotor rotational axis 8 of the rotor hub 3 than any portion of the hub housing 15.

Further, generally, in the wind turbine, it is impossible to avoid load increase in accordance with approach to the rotational center side of the rotor. Accordingly, heavy load is applied on the rotor hub 3 in the vicinity of the rotor rotational axis 8 of the roto 6. In addition, the hub housing 15 of the rotor hub 3 is a primary part to transmit the rotation kinetic energy of the rotor 6 to a main shaft in the rotor rotational axis 8. Accordingly, particularly heavy load is concentrated on the hub housing in the rotor hub 3. In the structure shown in the present example, the hub housing 15 is provided with the respective bearings 4a, 4b and 4c only to directly-rotatably support the respective blades 5a, 5b and 5c. The reliability is improved without unnecessary member such as additional bearing. That is, it is possible to greatly reduce the risk of failure in comparison with a structure having plural bearings by providing only one bearing between the respective blades 5a, 5b and 5c and the rotational center of the rotor hub 3.

Further, as the hub housing 15 is a relatively large part, it may be configured such that the respective supporting members for blade 19a, 19b and 19c are prepared as divided members, and upon assembly, they are bolt-fastened at a flange. However, when the materials are divided and the heavy load is supported only with the bolts, there is a possibility of failure at the fastening portion. It is possible to suppress and avoid failure by configuring the rotor 3 having an integral structure with a material continued from the center to the portion connected to the respective bearings 4a, 4b and 4c. That is, it is possible to further improve the reliability.

On the other hand, to suppress large weight increase and cost increase, the structure of the respective supporting members for blade 19a, 19b and 19c may be simplified. However, improvident reduction of the structure causes local concentration of load, and there is a risk of failure (breakage). In contrast, in the hub housing 15 in the present example, the contour of the respective supporting members for blade 19a, 19b and 19c spreads from the side connected to the respective bearings 4a, 4b and 4c toward the rotor rotational axis 8 side. Accordingly, it is possible to avoid local load concentration and suppress and avoid failure (breakage).

The status of tilt is a significant element of the effect of reduction of load fluctuation by tilting the respective bearings 4a, 4b and 4c at the bearing attachment angle $\alpha_b$. In general, in a downwind wind turbine, when the tower and the full length of the blade simultaneously overlap in a wind direction, large load fluctuation occurs. Accordingly, it is important that the tower 1 and the blade 5a (or 5b, or 5c) do not overlap in a large region at once and the overlap state is scattered in a status where the tower central axis 7 of the tower 1 and the bearing rotational axis 10a (or 10b, or 10c) of the bearing 4a (or 4b, or 4c) extending in a full length direction of the blade 5a (or 5b, or 5c) are arrayed approximately in parallel to each other.

Accordingly, when the distance $R_{ba}$ from the rotor rotational axis 8 to the bearing rotational axis 10a is equal to or greater with respect to a total distance of a distance 1/2 of the mean width $D_t$ of the tower 1 and a distance 1/2 of the edgewise mean width $L_b$ of the blade 5a (or 4b, or 5c), it is possible to avoid the overlap between the tower 1 blade 5a (or 5b, or 5c), and further obtain the effect of reduction of load fluctuation by tilting the bearing 4a (or 4b, or 4c).

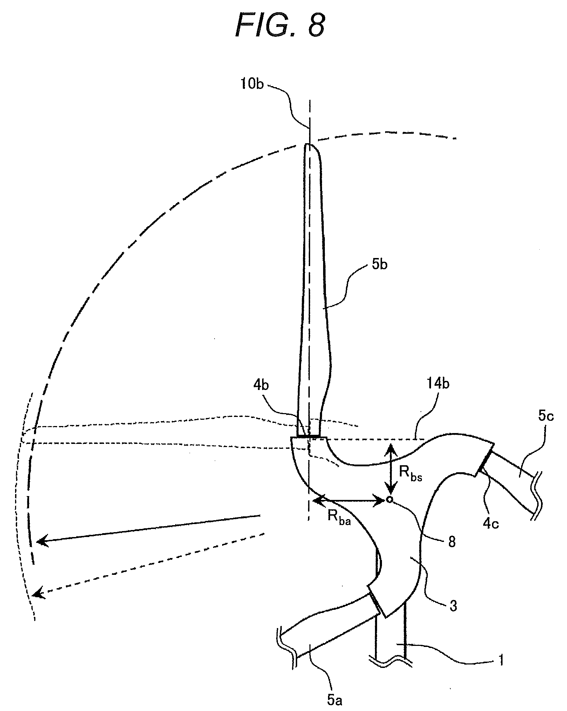

As a further effect of setting the distance $R_{ba}$ from the rotor rotational axis 8 to the bearing rotational axis 10a, it is possible to enlarge the diameter of the rotor 6 and increase the power generation amount without replacing the respective blades 5a, 5b and 5c to other members. Note that it is difficult to obtain the effect of increase in the power generation amount by enlargement of the diameter of the rotor 6 depending on the relation between the distances $R_{ba}$ and $R_{bs}$. Figure 8 shows the downwind wind turbine where the distance $R_{bs}$ is less than the distance $R_{ba}$. Here the case where the distance $R_{bs}$ is less than the distance $R_{ba}$ is indicated with a solid line. As shown in Figure 8, even when the distance $R_{bs}$ is less than the distance $R_{ba}$, the diameter of the rotor 6 is enlarged. However, when the rotor 3 to the position of the bearing 4b is provided, it is possible to further enlarge the diameter of the rotor 6 to further increase the power generation amount by exchange the bearing rotational axis 10b with the bearing rotational plane 14b as indicated with a broken line in Figure 8. Accordingly, when the distance $R_{ba}$ is equal to or less than the distance $R_{bs}$, it is possible to further obtain the effect of the increase in the power generation amount by virtue of the enlargement of the diameter of the rotor 6 by utilizing the structure of the rotor hub 3. Note that with respect to an arbitrary distance $R_{bs}$, when the distance $R_{ba}$ is equal to the distance $R_{bs}$, the enlarged diameter of the rotor 6 is a maximum diameter, and the maximum effect of the increase in the power generation amount is attained. Note that even in the structure shown in Figure 8, the effect of improvement in the reliability is obtained. Accordingly, it is not excluded from the scope of the present invention.

In the downwind wind turbine where the blade is set on the downstream side of the tower with respect to a wind direction, as the blade crosses a slipstream occurred on the downstream side of the tower, in comparison with an upwind wind turbine where the blade is set on the upstream side of the tower, the load fluctuation is relatively large. Accordingly, the present invention is further preferably applied. Note that the applicable range of the present invention is not limited to the downwind wind turbine. A certain effect is expected even when the invention is applied to an upwind wind turbine where the blade is rotated in a status where it is positioned windward upon power generation operation. That is, even in the upwind wind turbine, load fluctuation occurs by pressure rise between the blade and the tower due to aerodynamic interference. Accordingly, the present invention is applicable to the upwind wind turbine.

Reference Signs List

1: tower,
2: nacelle,
3: rotor hub,
4a, 4b, 4c: bearing,
5a, 5b, 5c: blade,
6: rotor,
7: tower central axis,
8: rotor rotational axis,
9, 12: horizontal plane,
10a, 10b, 10c: bearing rotational axis,
11: rotor rotational plane,
13: circumference with rotor rotational axis as a center,
14a, 14b: bearing rotational plane,
15: hub housing,
16: spinner cover,
17: orthogonal plane in rotor radial direction,
18: tower region overlapped with blade,
19a, 19b, 19c: supporting member for blade,
20a, 20b: rotational center.

**Claims**

1. A wind power generation device comprising:

   a tower;
   a nacelle that is provided on the top of the tower and is supported rotatably with respect to the tower; a rotor hub that is supported rotatably with respect to the nacelle and has a hub housing; a blade that receives a wind to obtain a lift force; and a bearing that supports the blade rotatably with respect to the rotor hub,
   wherein the bearing is provided in a status where it is tilted from a position on a circumference with a rotational axis of the rotor hub as a center.

2. The wind power generation device according to claim 1,
   wherein the bearing is provided in a position closest to the rotational center of the rotor hub.

3. The wind power generation device according to claim 1 or 2,
   wherein a bearing provided between one blade and the rotational center of the rotor hub is only the bearing and one bearing.

4. The wind power generation device according to any one of claims 1 to 3,
   wherein the blade is directly connected via the bearing to the rotor hub.

5. The wind power generation device according to any one of claims 1 to 4,
   wherein the hub housing has a supporting member for blade connected to the blade, and
   wherein the supporting member for blade is extended away further from the rotational center of the rotor hub than from any portion of the hub housing.

6. The wind power generation device according to claim 5,
   wherein the supporting member for blade is formed to spread from a side connected to the bearing toward a rotational axis side of the rotor hub.

7. The wind power generation device according to claim 6,
   wherein the hub housing has an integral structure from a center of the rotor hub to a portion connected to the bearing.

8. The wind power generation device according to any one of claims 1 to 7,
   wherein, assuming that a mean width in a direction approximately vertical to a central axis of the tower from a position of the tower at which an end of the blade arrives to a top of the tower is $D_t$,
   a mean width in a edgewise direction of the blade is $L_b$, and
   a distance from the rotational axis of the rotor hub to the rotational axis of the bearing is $R_{ba}$,
   a relation $R_{ba} \geq 0.5\,D_t + 0.5\,L_b$ is satisfied.

9. The wind power generation device according to claim 8,
   wherein assuming that a distance from a rotational center of the bearing to the rotational axis of the rotor hub is $R_{bc}$, and
   when $Rbs = \sqrt{(R_{bc}^2 / -R_{ba}^2)}$ holds,
   the relation $R_{ba} \leq R_{bs}$ is satisfied.

10. The wind power generation device according to claim 9,
    wherein $R_{ba}$ and $R_{bs}$ are approximately equal to each other.

11. The wind power generation device according to any one of claims 1 to 10,
    wherein the wind power generation device is a downwind wind power generation device, and
    wherein upon power generation operation, the blade is rotated in a status where the blade is positioned on a leeward side of the tower.

## FIG. 1

# FIG. 2

WIND
DIRECTION

# FIG. 3

# FIG. 4

# FIG. 5

## FIG. 6

WIND
DIRECTION

ROTATIONAL
DIRECTION

1

5a

## FIG. 7

ROTOR LOAD

ROTOR ROTATIONAL POSITION (° )

—— PRESENT
INVENTION

----- CONVEN-
TIONAL ART

# FIG. 8

# FIG. 9

## INTERNATIONAL SEARCH REPORT

| International application No. |
| --- |
| PCT/JP2013/062318 |

**A. CLASSIFICATION OF SUBJECT MATTER**
*F03D1/06*(2006.01)i, *F03D11/00*(2006.01)i

According to International Patent Classification (IPC) or to both national classification and IPC

**B. FIELDS SEARCHED**

Minimum documentation searched (classification system followed by classification symbols)
F03D1/06, F03D11/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 57-83672 A  (ShinMaywa Industries, Ltd.),<br>25 May 1982 (25.05.1982),<br>entire text; all drawings<br>(Family: none) | 1-7,11<br>8-10 |
| A | WO 2011/081401 A2  (YOON Jeen Mok),<br>07 July 2011 (07.07.2011),<br>entire text; all drawings<br>& JP 2013-516564 A        & US 2012/0286519 A1<br>& EP 2488748 A             & KR 10-1027055 B1<br>& CN 102639867 A | 1-11 |
| A | JP 2010-14105 A  (Ryozo OTA),<br>21 January 2010 (21.01.2010),<br>entire text; all drawings<br>(Family: none) | 1-11 |

| ☐ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 July, 2013 (25.07.13) | Date of mailing of the international search report<br>06 August, 2013 (06.08.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004108162 A
- JP 2000310179 A